(19) Europäisches Patentamt

European Patent Office

Office européen des brevets

(11) **EP 1 601 703 B1**

(12) **EUROPEAN PATENT SPECIFICATION**

(45) Date of publication and mention
of the grant of the patent:
**05.07.2006 Bulletin 2006/27**

(51) Int Cl.:
*C08F 255/00* (2006.01)  *C08F 255/02* (2006.01)
*C08F 10/00* (2006.01)

(21) Application number: **05714158.2**

(22) Date of filing: **08.02.2005**

(86) International application number:
**PCT/EP2005/050525**

(87) International publication number:
**WO 2005/080457 (01.09.2005 Gazette 2005/35)**

(54) **CATALYST DEPLOYMENT IN BIMODAL POLYOLEFIN PRODUCTION**

KATALYSATOREINSATZ BEI DER HERSTELLUNG VON BIMODALEM POLYOLEFIN

DEPLOIEMENT CATALYTIQUE POUR LA PRODUCTION DE POLYOLEFINES BIMODALES

(84) Designated Contracting States:
**AT BE BG CH CY CZ DE DK EE ES FI FR GB GR
HU IE IS IT LI LT LU MC NL PL PT RO SE SI SK TR**

(30) Priority: **13.02.2004 EP 04100590**

(43) Date of publication of application:
**07.12.2005 Bulletin 2005/49**

(73) Proprietor: **TOTAL PETROCHEMICALS
RESEARCH FELUY
7181 Seneffe (Feluy) (BE)**

(72) Inventor: **DAMME, Eric
B-7181 Arquennes (BE)**

(74) Representative: **Leyder, Francis
Total Petrochemicals Research Feluy
Zone Industrielle C
7181 Seneffe (Feluy) (BE)**

(56) References cited:
**EP-A- 0 580 930        EP-A- 1 020 481**

## Description

The present invention concerns an improved method for polymerising olefins, in particular for polymerising ethylene to produce bimodal polyethylene. The method is advantageous, since it allows a mixture of high molecular weight polyolefin and low molecular weight polyolefin to be produced in a highly mixed state in the reaction, such that when the product stream is fed into an extruder, no pre-mixing of the two modes of the final polyolefin is required. The invention of the method is further advantageous, because the relative quantities of each mode can be optimised for ease of blending during extrusion. The invention further concerns an apparatus for performing the method of the invention.

For many years it has been desirable to increase the efficiency of polyolefin production, and to improve the quality of the polyolefin product. In particular, it has been desirable to produce a polyolefin product that is hard-wearing, impact resistant, and resistant to cracking, so that the product is durable, and will stand up to the normal wear and tear of a diverse range of applications. It was also desirable that the product should simultaneously exhibit good processability, in order that it can be formed into a diverse range of products. These polymer characteristics are, to some extent, conflicting: durability is usually improved by increasing the molecular weight of the polymer, whilst processability is generally improved by decreasing the molecular weight of the polymer.

It has been known for some time that these characteristics can be achieved by ensuring that the polymer product is bimodal. In other words, by ensuring that the product contains a component having a lower molecular weight and a component having a higher molecular weight. The lower molecular weight mode imbues the final polymer with the desired processability, whilst the higher molecular weight mode imbues the product with the necessary durability and hardness. However, mixing the two components to form the final polymer can be problematic. The greater the difference between the molecular weights of the components, the more difficult it is to mix those components. Accordingly, using known processes a limitation has been set on the degree of processability and durability, based upon the need for the component modes to be miscible to an acceptable degree.

In the past, attempts have been made to devise processes for producing bimodal polyolefins. One well-known process makes use of two reactors, one for producing the lower molecular weight component and the second for producing the higher molecular weight component. These reactors may be employed in parallel, in which case the components must be mixed after production. More commonly, the reactors are employed in series, such that one component is formed in the first reactor and the second is formed in the second reactor in the presence of the first component. In this way, the two components are more intimately mixed, since one is formed in the presence of the other. This product is then blended in an extruder to complete the mixing process. This improvement in mixing allowed a greater molecular weight difference between the components to be employed. In this process, a 50:50 mix of low:high molecular weight components has generally been employed, since it was considered that this ratio gave rise to the correct mix of properties in the product. However, one further problem arose in respect of the final blending step in the extruder: a 50:50 ratio was not the ideal mix for blending. Instead, a 40:60 ratio of low:high molecular weight components was found to give rise to more efficient and homogeneous blending.

To solve this problem, a further improvement to this process has been developed more recently. This improvement makes use of two reactors in series, the first for producing the low molecular weight component, and the second for producing the high molecular weight component. The low molecular weight component is produced by polymerisation of an olefin monomer in the first reactor. Normally the low molecular weight component and catalyst would all be fed into the second reactor for the next phase of production. However, in the improved process, 20 wt% of the low molecular weight component is removed from the system altogether. The remaining 80 wt.% of the low molecular weight component is fed into the second reactor, and the high molecular weight component is produced in the presence of only 80 % of the low molecular weight component. The final product should have equal quantities of high and low molecular weight components. Thus, after production of the high molecular weight component, the second rector comprises 40 parts of the low molecular weight component, mixed with 50 parts of the high molecular weight component. This mixture is then extruded in an extruder. Thus, in the blending step the ratio of 40:50 for the two components is advantageously employed. The low molecular weight fraction that was removed from the system (equivalent to 10 parts of the total product) may be added to the extruder at the same time as the 40:50 mix, or alternatively downstream of the initial blending point, to obtain a final 50:50. ratio of components.

This approach has met with some success, but there is still a requirement to improve the polyolefin production process to improve mixing between the component modes of the final product, and thereby improve the properties of the product.

It is an aim of the present invention to solve the problems associated with known methods, as discussed above. Thus, the present invention seeks to provide an improved method for polymerising olefins, and in particular for producing bimodal polyethylene or polypropylene.

Accordingly, the present invention provides a method for polymerising olefins in a double loop reactor, which method comprises the following steps:

(a) introducing in the first reactor a quantity of a first catalyst system;

(b) injecting a monomer and an optional comonomer into the first reactor;

(c) maintaining under first polymerisation conditions to produce a first high molecular weight polyolefin component;

(d) transferring the first polyolefin component to a second reactor;

(e) introducing into the second reactor a second catalyst component, preferably the same as that introduced in the first reactor,

(f) introducing additional monomer and an optional comonomer into the second reactor, preferably the same as that introduced in the first reactor;

(g) maintaining under second polymerisation conditions, to produce two low molecular weight polyolefin components, resulting respectively from the polymerisation of the first polyolefin component transferred from the first reactor and from the second monomer component introduced into the second reactor; and

(h) retrieving a final polymer product comprising the two polymer components in a single stream.

The quantities of the two catalyst components may be determined beforehand or during the process. The quantities are determined, or selected, depending upon the desired properties of the final product. It is known that the quantity of the product is dependent on the quantity of the catalyst and depends on the reactor conditions (temperature, concentration in hydrogen, monomer and comonomer). The reaction products from the first reactor and the second catalyst may be introduced into the second reactor in any order or simultaneously. The first catalyst and the second catalyst components may be the same or different, preferably they are the same. When they are the same catalyst component, the catalyst may be fed into the second reactor from a feed branching from the feed into the first reactor, if desired. A separate feed is preferably employed when the two catalysts are different. The olefin monomer polymerised in each reactor need not be the same, for example if a mixture of two different polymers is desired. However, generally, the same olefin monomer is employed in both the first and second reactors.

In prior art operating conditions, catalyst particles A are introduced into the first reactor, the monomer is injected and the system is maintained under first polymerisation conditions. Particles A thus grow and at the outlet of the first reactor, they contain from 20 to 80 parts, preferably from 40 to 60 parts and more preferably from 48 to 52 parts of high molecular weight (HMW) resin. They are transferred to the second reactor, the system is maintained under second polymerisation conditions and the same particles grow further with the low molecular weight (LMW) fraction so as to incorporate at the outlet of the second reactor about 50 parts of the HMW fraction and about 50 parts of the LMW fraction.

In the process according to the present invention, catalyst particles A are introduced into the first reactor, the monomer and optional comonomer are injected and the system is maintained under polymerisation conditions. Particles A thus grow and at the outlet of the first reactor, they contain from 20 to 80 parts, preferably from 40 to 60 parts and more preferably from 48 to 52 parts of high molecular weight (HMW) resin. They are transferred to the second reactor simultaneously with catalyst particles B. The system is maintained under second polymerisation conditions and both particles A and B grow to produce together the desired amount of the low molecular weight fraction that is of from 20 to 80 parts, preferably of from 40 to 60 parts and more preferably of from 48 to 52 parts. At the outlet of the second reactor, there is a single stream of polymer containing both A and B particles wherein particles A contain from 20 to 80 parts, preferably from 40 to 60 parts and most preferably from 48 to 52 parts of HMW and X% of the remaining 80 to 20 parts, preferably 60 to 40 parts and most preferably 52 to 48 parts of LMW and wherein particles B are composed only of LMW and thus contain (100-X)% of the 80 to 20 parts, preferably 60 to 40 parts and most preferably 52 to 48 parts of LMW.

X is preferably between 20 and 100%, more preferably between 50 and 90% and most preferably between 60 and 90%. For a 50 HMW/50 LMW formulation, the latter range corresponds to 5 to 20 wt% based on the total polymer weight, of the second polymer prepared with the second catalyst component in the second reactor.

When both catalyst systems are the same and assuming that the activity of the first catalyst component is not modified by the first reactor, the flow of catalyst injected into the second reactor F2 is calculated as a function of the flow of catalyst injected into the first reactor F1 as

$$F2 = .(100\text{-}X)/X . F1$$

The method of the present invention is particularly advantageous, since it allows more intimate mixing of the two polyolefin modes in the final product. In addition, the final product emerges from the second reactor in a form particularly suitable for blending, e.g. in an extruder. In the first reactor, particles of the first component that are produced are associated with catalyst particles. These catalyst particles also take part in catalysis in the second reactor to produce the second component. Thus, in the final product, there are particles of the first catalyst that are associated with particles of both the first and second polyolefin components since these particles were present in both the first and second polymerisation reactors. In an embodiment according to the present invention, the high molecular weight component is produced in the first reactor and the low molecular weight component is produced in the second reactor. Depending on the ratio of the first and second catalyst components selected for the method, there will be for example 50:40 parts of the high:low molecular weight components attached to the first catalyst particles when they exit the second reactor. In this example there is a further 10 parts of the low molecular weight component attached to particles of the second catalyst component when they exit the second reactor and no high molecular weight component as the catalyst component was added to the second reactor. The final product stream of this example, emerging from the second reactor will thus have a 50:50 ratio of each component in total, but this will be made up of catalyst particles associated with a 50:40 polymer ratio (high:low) and a 0:10 polymer ratio (low only). It should be noted that these ratios are employed for illustration purposes only, and different ratios may be employed if desired. It is these specially engineered particle ratios that lead to improved blending characteristics. A further advantage over known methods is that the whole product exits the reactor in a single stream and can be extruded or homogenised. In the prior art methods, two product streams are produced, which require a more complex and expensive powder feeding and blending procedure before being homogenised in the extruder.

A typical process for producing the polymer powder will now be described, which can be employed in the present invention. Such a process generally employs a turbulent flow reactor such as a continuous pipe reactor in the form of a loop. However, other types of reactors such as stirred reactors may be used.

Polymerisation is carried out in a loop reactor in a circulating turbulent flow. A so-called loop reactor is well known and is described in the Encyclopaedia of Chemical Technology, 3rd edition, vol.16 page 390. This can produce LLDPE (linear low density polyethylene) and HDPE (high density polyethylene) resins in the same type of equipment. A loop reactor is connected in series to one or more further reactors, such as another loop reactor. A loop reactor that is connected in series to another loop reactor may be referred to as a "double loop" reactor.

In the present invention, the polymerisation process carried out in a double loop reactor is a continuous process. A monomer (e.g. ethylene) polymerises in a liquid diluent (e.g. isobutene) in the presence of a comonomer (e.g. hexene), hydrogen, catalyst, and activating agent. The slurry is maintained in circulation by an axial pump in a reactor consisting essentially of vertical jacketed pipe sections connected by trough elbows. The polymerisation heat is extracted by a water cooling jacket The reactor line includes two loop reactors that can be used in parallel or in series. The approximate volume of the reactors may be about 100m$^3$. Monomodal and bimodal grades can be produced with the parallel or series configuration. In this invention, bimodal grades are produced with the series configuration.

The product (e.g. polyethylene) is taken out of the reactor with some diluent through settling legs and discontinuous discharge valves. A small fraction of the total circulating flow is withdrawn. It is moved to a polymer degassing section in which the solid content is increased.

While being depressurised, the slurry is transferred through heated flash lines to a flash tank. In the flash tank, the product and diluent are separated. The degassing is completed in a purge column. A conveyor drying unit may be employed before the purge column in some instances.

The powder product is transported under nitrogen to fluff silos and extruded into pellets along with some specific additives.

The gas exiting the flash tank and the purge column is treated in a distillation section. This allows the separate recovery of diluent, monomer and comonomer.

This embodiment of the double loop reactor process may be used with chromium type, Ziegler-Natta type or metallocene type catalysts.

It will be seen from the above that the present invention preferably relates to deployment of the catalyst used in the polymerisation reaction in the two reactors in series.

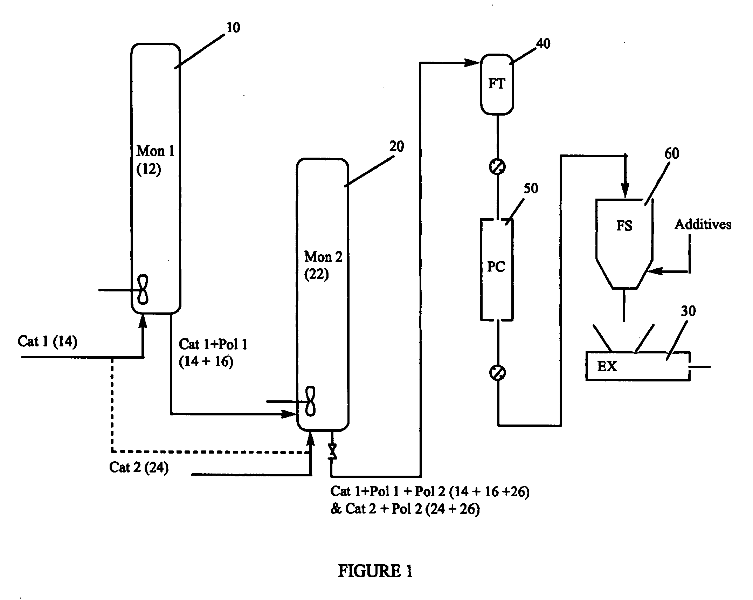

The present invention will now be described in more detail by way of example only with reference to the following Figure 1, which depicts an example of an arrangement in which the embodiments of the present invention may be implemented.

The arrangement of Figure 1 comprises a first reactor 10, a second reactor 20 and an extruder 30. The arrangement of Figure 1 may comprise various other elements useful or necessary for the operation of the arrangement, such as a flash tank 40, purge column 50 and fluff silo 60. The general operation of this type of arrangement has been discussed above.

The present method preferably comprises a step of blending the first and second olefin components in an extruder 30. In this step, a single product stream 26 is extracted from the second reactor 20. This stream comprises particles of product with component ratios specifically designed to improve blending. The choice of extruder is not especially limited, and any apparatus common in the field may be employed.

The ratio of first and second components 16, 26 in the final product is not especially limited, and may be selected dependent upon the characteristics desired in the final product. Typically, the ratio of first polyolefin component to second polyolefin component ranges from 80:20 wt.% to 20:80 wt.% respectively. More preferably the ratio of first polyolefin component to second polyolefin component ranges from 60:40 wt.% to 40:60 wt.% respectively. A ratio of approximately 50:50 wt.% is especially preferred.

The quantity of the second polyolefin component 26 produced by the second catalyst 24 is also not especially limited, and may be selected to optimise the blending characteristics of the final product stream. The nature of the monomer and relative molecular weights of the components may be taken into consideration when making this selection. Typically the quantity of the second polyolefin component produced by the second catalyst ranges from 1-40 wt.% of the total quantity of the first and second polyolefin. More preferably, the quantity of the second polyolefin component produced by the second catalyst ranges from 5-20 wt.% of the total quantity of the first and second polyolefin. A quantity of approximately 10 wt.% is especially preferred.

In a preferred embodiment of the present invention, the first polyolefin component 16 is a high molecular weight component, and the second polyolefin component 26 is a low molecular weight component.

The temperature employed in the reactor is not particularly limited, and may be selected depending upon the reactants employed, the reactor vessel and the monomer concentration, amongst other factors. Preferably, however, the temperature employed for polymerisation ranges from 70-120°C. More preferably the temperature employed ranges from 80-110°C.

The solvent employed in the process is not especially limited, provided that it is suitable for polymerising the chosen monomer under the selected reaction conditions. Preferably the solvent comprises butane and/or hexane, especially for the polymerisation of ethylene or propylene.

In a particularly preferred embodiment of the invention, the olefin monomer is selected from ethylene and propylene.

The present invention further provides an apparatus for polymerising an olefin monomer, which apparatus comprises the following:

(a) a first reactor 10 for polymerising the olefin monomer 12 to form a first polyolefin component 16;
(b) a second reactor 20 for polymerising the olefin monomer 22 to form a second polyolefin component 26;
(c) a means for transferring substances from the first reactor to the second reactor;
(d) a means for introducing a catalyst 14 to the first reactor 10; and
(e) a means for introducing a catalyst 24 to the second reactor 20.

Preferably, the means for introducing a catalyst 14 to the first reactor 10 is in communication with the means for introducing a catalyst 24 to the second reactor 20. Thus, a catalyst system may be fed into both the first and second reactors 10, 20, with the catalyst entering each reactor being controlled depending on the ratio of each component to be produced. The reaction may be adjusted by using appropriate quantities of the same catalyst compound in the first and second reactors or by using different catalyst compound for the first reactor than for the second reactor, both in an appropriate quantity.

## Examples.

Comparative example: standard production.

In the first loop reactor, the catalyst system was injected at a rate of 2.5 kg/hr. The production rate was 13 tons/hr of a polyethylene resin having a HLMI of 0.25 dg/min and a density of 0.927 g/cc The HLMI was measured following the method of standard test ASTM D 1238 at a temperature of 190 °C and under a load of 21.6 kg. The density was measured following the method of standard test ASTM D 1505 at a temperature of 23 °C. The product was sent to the second loop reactor with a C2 off gas of 1.1 wt% and at a temperature of 82 °C. In the second loop reactor, no catalyst was added and the reactor was operated with a C2 off gas was of 4 wt% and at a temperature of 90 °C. The production rate in the second reactor was 13 tons/hr of the low molecular weight fraction. The final resin was produced at a rate of 26 tons/hr: it had a HLMI of 9 dg/min and a density of 0.950 g/cc. The resin was sent to the extruder and a gel level of 25 ppm was measured.

Example according to the invention.

In the first loop reactor, the catalyst system was injected at a rate of 2.5 kg/hr. The production rate was 13 tons/hr of a polyethylene resin having a HLMI of 0.25 dg/min and a density of 0.927 g/cc. The product was sent to the second loop reactor with a C2 off gas of 1.1 wt% and at a temperature of 82 °C. In the second loop reactor, the same catalyst system as that used in the first reactor was added at a rate of 0.7 kg/hr. The reactor was operated with a C2 off gas was of 3.1 wt% and at a temperature of 90 °C. The production rate in the second reactor was 13 tons/hr of the low molecular weight fraction. The final resin was produced at a rate of 26 tons/hr: it had a HLMI of 9 dg/min and a density of 0.950 g/cc. The resin was sent to the extruder and a gel level of 9 ppm was measured.

Assuming that the activity of the catalyst system is the same in both reactors, the final product comprises a mixture of:

- polyethylene that comprises 50 parts of high molecular weight (HMW) fraction and 39 parts of low molecular weight (LMW) fraction (56 wt% HMW and 44 wt% LMW) grown on the catalyst introduced in the first reactor;
- polyethylene that comprises 11 parts of LMW fraction grown on the catalyst introduced in the second reactor (100 wt% LMW)

## Claims

1. A method for polymerising olefins in a double loop reactor, which method comprises the following steps:

(a) introducing in the first reactor a quantity of a first catalyst system;
(b) injecting a first monomer and optional comonomer in the first reactor;
(c) maintaining under first polymerisation conditions to produce a first high molecular weight polyolefin component;
(d) transferring the first polyolefin component to a second reactor;
(e) introducing into the second reactor a second catalyst component, preferably the same as that introduced in the first reactor,
(f) introducing additional monomer in the second reactor, preferably the same as that introduced in the first reactor;
(g) maintaining under second polymerisation conditions, to produce two low molecular weight polyolefin components, resulting respectively from the polymerisation of the first polyolefin component transferred from the first reactor and from the second monomer component introduced into the second reactor; and
(h) retrieving the final polymer product comprising the two polymer components in a single stream.

2. The method according to claim 1, which method further comprises blending the first and second olefin components in an extruder.

3. The method according to any preceding claim, wherein the quantity of the second polyolefin component produced by the second catalyst quantity in the second reactor ranges from 5-20 wt.% of the total quantity of the first and second polyolefin.

4. The method according to any preceding claim, wherein the first polyolefin component is a high molecular weight component, and the second polyolefin component is a low molecular weight component.

5. The method according to any preceding claim, wherein the olefin monomer is selected from ethylene and propylene.

6. The method according to any preceding claim, wherein the first catalyst and the second catalyst are the same and are selected from a chromium catalyst, a Ziegler-Natta catalyst and a metallocene catalyst.


**Patentansprüche**

1. Verfahren zum Polymerisieren von Olefinen in einem Doppelschleifenreaktor, welches Verfahren folgende Schritte umfasst :

(a) Einführen einer Menge eines ersten Katalysatorsystems in den ersten Reaktor ;
(b) Einspritzen eines ersten Monomers und eines optionalen Comonomers in den ersten Reaktor ;
(c) Aufrechterhalten unter ersten Polymerisationsbedingungen, um eine erste Polyolefin-Komponente mit hohem Molekulargewicht zu produzieren ;
(d) Übertragen der ersten Polyolefin-Komponente zu einem zweiten Reaktor ;
(e) Einführen einer zweiten Katalysatorkomponente, vorzugsweise derselben wie die in den ersten Reaktor eingeführte, in den zweiten Reaktor ;
(f) Einführen von zusätzlichem Monomer, vorzugsweise demselben wie dem in den ersten Reaktor eingeführten, in den zweiten Reaktor ;
(g) Aufrechterhalten unter zweiten Polymerisationsbedingungen, um zwei Polyolefin-Komponenten mit niedrigem Molekulargewicht zu produzieren, jeweils entstanden aus der Polymerisation der ersten Polyolefin-Komponente, übertragen aus dem ersten Reaktor, und aus der zweiten Monomer-Komponente, eingeführt in den zweiten Reaktor ; und
(h) Gewinnen des endgültigen Polymerprodukts, bestehend aus den zwei Polymer-Komponenten in einem einzigen Strom.

2. Verfahren nach Anspruch 1, **dadurch gekennzeichnet, dass** es außerdem das Mengen der ersten und zweiten Olefin-Komponente in einem Extruder umfasst.

3. Verfahren nach einem der vorhergehenden Ansprüche, worin die Menge der zweiten Polyolefin-Komponente, produziert durch die zweite Katalysatormenge in dem zweiten Reaktor, im Bereich von 5-20 Gew. % der Gesamtmenge des ersten und zweiten Polyolefins liegt.

4. Verfahren nach einem der vorhergehenden Ansprüche, worin die erste Polyolefin-Komponente eine Komponente mit hohem Molekulargewicht und die zweite Polyolefin-Komponente eine Komponente von niedrigem Molekulargewicht ist.

5. Verfahren nach einem der vorhergehenden Ansprüche, worin das Olefin-Monomer ausgewählt ist aus Ethylen und Propylen.

6. Verfahren nach einem der vorhergehenden Ansprüche, worin der erste Katalysator und der zweite Katalysator dieselben sind und ausgewählt sind aus einem Chromkatalysator, einem Ziegler-Natta-Katalysator und einem Metallocen-Katalysator.

## Revendications

1. Procédé pour la polymérisation d'oléfines dans un réacteur à double boucle, ledit procédé comprenant les étapes suivantes consistant à :

   (a) introduire, dans le premier réacteur, une quantité d'un premier système de catalyseur ;
   (b) injecter un premier monomère et un comonomère facultatif en le premier réacteur ;
   (c) maintenir dans des premières conditions de polymérisation pour obtenir un premier composant de polyoléfine à poids moléculaire élevé ;
   (d) transférer le premier composant de polyoléfine à un deuxième réacteur ;
   (e) introduire, dans le deuxième réacteur, un deuxième composant de catalyseur, de préférence le même composant que celui introduit dans le premier réacteur ;
   (f) introduire une quantité supplémentaire de monomère dans le deuxième réacteur, de préférence du même monomère que celui introduit dans le premier réacteur ;
   (g) maintenir dans des deuxièmes conditions de polymérisation pour obtenir deux composants de polyoléfine à bas poids moléculaire, qui découlent respectivement de la polymérisation du premier composant de polyoléfine transféré depuis le premier réacteur et du deuxième composant de monomère introduit dans le deuxième réacteur ; et
   (h) récupérer le produit polymère final comprenant les deux composants de polymères, en un seul courant.

2. Procédé selon la revendication 1, ledit procédé comprenant en outre le fait de mélanger les premier et deuxième composants d'oléfines dans une extrudeuse.

3. Procédé selon l'une quelconque des revendications précédentes, dans lequel la quantité du deuxième composant de polyoléfine que l'on obtient via la deuxième quantité de catalyseur dans le deuxième réacteur représente un pourcentage se situant dans la plage de 5 à 20 % en poids de la quantité totale des première et deuxième polyoléfines.

4. Procédé selon l'une quelconque des revendications précédentes, dans lequel le premier composant de polyoléfine est un composant à poids moléculaire élevé et le deuxième composant de polyoléfine est un composant à bas poids moléculaire.

5. Procédé selon l'une quelconque des revendications précédentes, dans lequel le monomère d'oléfine est choisi parmi le groupe comprenant l'éthylène et le propylène.

6. Procédé selon l'une quelconque des revendications précédentes, dans lequel le premier catalyseur et le deuxième catalyseur sont identiques et sont choisis parmi le groupe comprenant un catalyseur à base de chrome, un catalyseur de type Ziegler-Natta et un catalyseur de métallocène.

FIGURE 1